# EUROPÄISCHE PATENTANMELDUNG

(11) **EP 3 659 436 A1**
(43) Veröffentlichungstag der Anmeldung: **03.06.2020**
(21) Anmeldenummer: 18209389.8
(22) Anmeldetag: 30.11.2018
(51) Int. Cl.: A01M 21/04

(54) **BEKÄMPFUNG VON PFLANZEN MITTELS ELEKTRISCHER ENERGIE**

(71) Anmelder: Bayer AG, 51373 Leverkusen (DE)
(72) Erfinder: HADLOW, James, CB8 9DJ Newmarket (GB)
(74) Vertreter: BIP Patents

(57) **Zusammenfassung**

Die Vorliegende Erfindung befasst sich mit der Bekämpfung von unerwünschten Pflanzen mittels elektrischer Energie. Gegenstände der vorliegenden Erfindung betreffen ein Verfahren und eine Vorrichtung zur Bekämpfung der Pflanzen.

## Beschreibung

Die Vorliegende Erfindung befasst sich mit der Bekämpfung von unerwünschten Pflanzen mittels elektrischer Energie. Gegenstände der vorliegenden Erfindung betreffen ein Verfahren und eine Vorrichtung zur Bekämpfung der Pflanzen.

Es gibt eine Vielzahl an Situationen, in denen unerwünschte Pflanzen bekämpft werden.

Beim Anbau von Kulturpflanzen in einem Feld treten üblicherweise unerwünschte Begleitpflanzen in Erscheinung, die mit den Kulturpflanzen um Ressourcen konkurrieren, die Durchführung landwirtschaftlicher Maßnahmen behindern oder erschweren, die Qualität der Ernte beeinträchtigen oder in sonstiger Weise den Anbau der Kulturpflanzen in negativer Weise beeinträchtigen. Es kann sich bei diesen Kulturpflanzenbegleitern zum Beispiel um Unkräuter/Ungräser oder um Pflanzen handeln, die in einer vorangegangenen Vegetationsperiode in dem Feld angebaut worden sind und nun austreiben. Es gilt, diese unerwünschten Pflanzen selektiv zu bekämpfen.

Die Bekämpfung von Pflanzen auf Gleisanlagen ist aus Sicherheitsgründen unbedingt erforderlich. Insbesondere das Schotterbett muss von Pflanzenbewuchs befreit und/oder freigehalten werden. Das Schotterbett ist üblicherweise flexibel und hilft sowohl statische als auch dynamische Belastungen gleichmäßig auf den Unterbau zu übertragen. Die unzähligen Hohlräume zwischen den einzelnen Steinen federn das enorme Gewicht von fahrenden Zügen und die Stöße wie ein Puffer ab. Pflanzen sowie der durch sie festgehaltene Humus können die Zwischenräume mit der Zeit verstopfen, was die Sicherheit der Züge erheblich gefährden kann. Aus Sicherheitsgründen muss deshalb Bewuchs aller Art von den Gleisanlagen ferngehalten werden.

Pflanzen an Straßenrändern, auf Gehwegen, öffentlichen Plätzen und dergleichen sind oftmals nicht nur aus ästhetischen Gründen unerwünscht; sie können auch durch ihr Wurzelwerk Schaden anrichten. Auch hier ist eine Bekämpfung erforderlich.

Für die Bekämpfung von Pflanzen stehen eine Reihe von Maßnahmen zur Verfügung, wie beispielsweise die Applikation eines Herbizids, das mechanische Entfernen oder die Bekämpfung mit elektrischer Energie.

Es kann Bereiche geben, in denen eine Applikation von Herbiziden nicht gewünscht ist. Das mechanische Entfernen ist oft mühsam, zumal üblicherweise das Wurzelwerk entfernt werden muss, um ein Wiederauftreten der Pflanzen zu verhindern.

Die Bekämpfung von Pflanzen mittels elektrischer Energie ist seit Jahrzehnten bekannt und im Stand der Technik ausgiebig beschrieben (siehe z.B. US248443, US2591597, US2682729, US4047326, US4428150, WO16016627, WO16162667, WO2018050137, WO2018050138, WO2018050142, WO2018050143, WO2018095450, WO2018095451).

Bei der Bekämpfung von Pflanzen mittels elektrischer Energie werden Teile einer Pflanze mit einer Kontaktelektrode in Berührung gebracht. Eine zweite Elektrode (die so genannte Gegenelektrode) wird entweder auch mit Teilen der Pflanzen in Berührung gebracht oder sie wird mit dem Erdboden, in dem die Pflanze wächst, in Berührung gebracht. Zwischen der Kontaktelektrode und der Gegenelektrode liegt eine elektrische Spannung, die dazu führt, dass ein elektrischer Strom von der Kontaktelektrode durch Teile der Pflanze zur Gegenelektrode (oder in umgekehrter Richtung, je nach Polung) fließt. Durch den elektrischen Strom kann die Pflanze geschädigt oder zerstört werden.

Im Stand der Technik ist eine Vielzahl unterschiedlicher Elektroden beschrieben, die für verschiedene Einsatzzwecke geeignet sind (Stabelektroden, Bürstenelektroden und dergleichen).

Nachteilig ist, dass ein bestimmter Elektrodentyp in der Regel nur für eine bestimmte Anwendung und/oder Pflanze geeignet ist.

Ausgehend vom Stand der Technik stellt sich daher die technische Aufgabe, Mittel zur Bekämpfung von unerwünschten Pflanzen bereitzustellen, die vielseitig und flexibel anwendbar sind.

Diese Aufgabe wird durch die Gegenstände der unabhängigen Patentansprüche gelöst. Bevorzugte Ausführungsformen finden sich in den abhängigen Patentansprüchen sowie in der Beschreibung und den Figuren.

Ein erster Gegenstand der vorliegenden Erfindung ist eine Vorrichtung umfassend
- einen Behälter zur Aufnahme einer elektrisch leitfähigen Flüssigkeit,
- mindestens eine Düse,
- Mittel zur Förderung der elektrisch leitfähigen Flüssigkeit aus dem Behälter durch die mindestens eine Düse,
- eine Düsenelektrode im Auslassbereich der mindestens einen Düse, wobei die Düsenelektrode so angeordnet ist, dass die elektrisch leitfähige Flüssigkeit bei der Förderung aus dem Behälter durch die mindestens eine Düse in Kontakt mit der Düsenelektrode kommt,
- eine Gegenelektrode und
- eine Spannungsquelle zum Anlegen einer Spannung zwischen der Düsenelektrode und der Gegenelektrode.

Ein weiterer Gegenstand der vorliegenden Erfindung ist ein Verfahren umfassend die Schritte:
- Richten mindestens einer Düse auf ein erstes Objekt,
- Fördern einer elektrisch leifähigen Flüssigkeit aus einem Behälter durch die mindestens eine Düse in Richtung des ersten Objekts,
   - wobei die aus der Düse austretende Flüssigkeit in Kontakt mit einer Düsenelektrode steht
   - wobei durch die Flüssigkeit eine elektrisch leitende Verbindung zwischen der Düsenelektrode und dem ersten Objekt hergestellt wird,
- Anlegen einer Spannung zwischen der Düsenelektrode und einer Gegenelektrode,
   - wobei die Gegenelektrode in einem direkten oder indirekten Kontakt mit einem zweiten Objekt steht,
   - wobei ein elektrischer Strom zwischen der Düsenelektrode und der Gegenelektrode über die elektrisch leitende Verbindung zum ersten Objekt und durch Teile des ersten Objekts und durch Teile des zweiten Objekts fließt.

Die Erfindung wird nachstehend näher erläutert, ohne zwischen den Erfindungsgegenständen (Vorrichtung, Verfahren) zu unterscheiden. Die nachfolgenden Erläuterungen sollen vielmehr für alle Erfindungsgegenstände in analoger Weise gelten, unabhängig davon, in welchem Kontext (Vorrichtung, Verfahren) sie erfolgen.

Wenn in der vorliegenden Beschreibung oder in den Patentansprüchen Schritte in einer Reihenfolge genannt werden, bedeutet dies nicht zwingend, dass die Erfindung auf die genannte Reihenfolge beschränkt ist. Vielmehr ist denkbar, dass die Schritte auch in einer anderen Reihenfolge oder auch parallel zueinander ausgeführt werden können; es sei denn, ein Schritt baut auf einem anderen Schritt auf, was zwingend erforderlich macht, dass der aufbauende Schritt nachfolgend ausgeführt wird (was im Einzelfall aber deutlich wird). Die genannten Reihenfolgen stellen damit bevorzugte Ausführungsformen der Erfindung dar.

Die vorliegende Erfindung dient zur Bekämpfung von unerwünschten Pflanzen. Bei unerwünschten Pflanzen kann es sich beispielsweise um Unkräuter/Ungräser in einem Feld von Kulturpflanzen, um Pflanzen in Schotterbetten von Gleisanlagen, um Pflanzen auf Geh- oder Fahrwegen oder dergleichen handeln.

Unter dem Begriff "Bekämpfung" wird eine Verhinderung der Ausbreitung oder Reduzierung der Menge an vorhandenen unerwünschten Pflanzen verstanden.

Die Bekämpfung erfolgt mittels elektrischer Energie, die in die Pflanze eingebracht wird. Das Einbringen der Energie erfolgt mit Hilfe von mindestens zwei Elektroden, zwischen denen eine elektrische Spannung herrscht: einer Düsenelektrode und einer Gegenelektrode. Ziel ist es, die unerwünschte Pflanze dadurch zu schwächen oder zu zerstören, dass ein elektrischer Strom zwischen den mindestens zwei Elektroden fließt, der zumindest durch einen Teil der Pflanze fließt.

Erfindungsgemäß wird eine elektrisch leitfähige Flüssigkeit verwendet, um eine elektrisch leitende Verbindung zwischen der Düsenelektrode und der Pflanze herzustellen.

Unter dem Begriff "Flüssigkeit" wird Materie im flüssigen Aggregatzustand verstanden. Bei der erfindungsgemäßen Flüssigkeit handelt es sich um einen Stoff oder ein Stoffgemisch, der/das bei der erfindungsgemäßen Verwendung in flüssiger Form vorliegt. Dabei ist es denkbar, dass die Flüssigkeit bei der erfindungsgemäßen Verwendung die gleiche Temperatur aufweist, wie beispielsweise die Umgebung, in der sie eingesetzt wird, oder die Pflanze, auf die sie geleitet wird, oder der Boden auf den sie geleitet wird. Denkbar ist aber auch, dass sie eine höhere oder niedrigere Temperatur aufweist als die Umgebung, in der sie eingesetzt wird, oder die Pflanze, auf die sie geleitet wird, oder der Boden, auf den sie geleitet wird. Üblicherweise liegt die Flüssigkeit in einem Temperaturbereich von 5°C bis 90°C unter Normaldruck (1,01325 bar) in flüssiger Form vor.

Unter dem Begriff "elektrisch leitfähige Flüssigkeit" wird eine Flüssigkeit verstanden, die elektrischen Strom leitet. Vorzugsweise ist die Leitfähigkeit größer als die von destilliertem Wasser (1 µS/cm). Noch mehr bevorzugt ist die Leitfähigkeit größer als 1 mS/cm.

Die Leitfähigkeit der Flüssigkeit kann durch den Zusatz von Stoffen erhöht werden, die in der Flüssigkeit in positiv und negativ geladene Ionen dissoziieren. In einer bevorzugten Ausführungsform umfasst die elektrisch leitfähige Lösung Wasser als Hauptbestandteil. Dem Wasser kann ein Stoff oder können mehrere Stoffe zugeführt sein, die in dem Wasser in positiv und negativ geladene Ionen dissoziieren. Beispiele für solche Stoffe sind Salze wie beispielsweise Natriumcarbonat, Natriumhydrogencarbonat, Ammoniumcarbonat, Ammoniumhydrogencarbonat, Ammoniumacetat, Ammomiumphosphat, Ammoniumnitrat oder dergleichen oder Säuren wie Beispielsweise Essigäure, Zitronensäure, Kohlensäure oder dergleichen oder Basen wie beispielsweise Ammoniak oder dergleichen.

Der elektrisch leitfähigen Flüssigkeit können ferner Stoffe zugesetzt sein, die eine biologische Wirkung aufweisen wie beispielsweise Herbizide, Fungizide oder Insektizide.

Der elektrisch leitfähigen Flüssigkeit können ferner Stoffe zugesetzt sein, die eine Erhöhung oder Erniedrigung der Oberflächenspannung der Flüssigkeit erzielen, wie beispielsweise Salze oder Tenside.

Die elektrisch leitfähige Flüssigkeit wird in einem Behälter aufbewahrt. Der Behälter kann aus Kunststoff und/oder Metall und/oder einem Verbundmaterial gefertigt sein. Der Behälter hat üblicherweise eine reversibel verschließbare Öffnung, über die der Behälter mit einer elektrisch leitfähigen Flüssigkeit befüllt werden kann. Der Behälter hat ferner einen Auslass, der üblicherweise in eine Leitung mündet. Eine solche Leitung verbindet den Behälter mit einer oder mehreren Düsen.

Es sind Mittel zur Förderung der elektrisch leitfähigen Flüssigkeit aus dem Behälter durch die Leitung zu der mindestens einen Düse vorhanden (Fördermittel). Die Förderung der Flüssigkeit kann beispielsweise dadurch erfolgen, dass der Behälter mit einem Druck beaufschlagt wird, der die elektrisch leitfähige Flüssigkeit aus dem Behälter durch die Leitung in Richtung der mindestens einen Düse drückt. Es ist auch denkbar, eine elektrisch angetriebene Pumpe als Fördermittel zu verwenden.

Die elektrisch leitfähige Flüssigkeit wird mit Hilfe einer Düse oder mehrerer Düsen und einem Fördermittel in die Form eines Flüssigkeitsstrahls oder mehrerer Flüssigkeitsstrahlen gebracht. Der Begriff Flüssigkeitsstrahl soll in dieser Beschreibung nicht einschränkend verstanden werden; ein Flüssigkeitsvorhang soll beispielsweise ebenfalls unter den Begriff Flüssigkeitsstrahl fallen. Der Zweck der elektrisch leitfähigen Flüssigkeit besteht darin, für eine spezifische Zeitspanne eine elektrisch leitende Verbindung zwischen mindestens einer Elektrode und einer unerwünschten Pflanze oder dem Boden, in dem sie wächst, aufzubauen. Um diesen Zweck zu erfüllen, ist keine spezifische Form der Flüssigkeit erforderlich; entscheidend ist lediglich, dass ein solcher Flüssigkeitsstrahl zwischen der Elektrode und der Pflanze oder dem Boden zusammenhängend (ununterbrochen) ist. Das bedeutet, dass Elektrode und Pflanze (bzw. Elektrode und Boden) über eine zusammenhängende Flüssigkeitsstrecke miteinander verbunden sind, so dass sich ein Ladungsträger entlang der Flüssigkeitsstrecke von der Elektrode zur Pflanze (bzw. zum Boden) oder umgekehrt bewegen kann, ohne die Flüssigkeit verlassen zu müssen.

Es ist bekannt, dass sich ein Flüssigkeitsstrahl, der beispielsweise horizontal aus einer kreisrunden Öffnung ohne Einfluss seitlicher Begrenzungen in ein ruhendes, homogenes und isothermes Umgebungsmedium wie beispielsweise Luft eintritt, lange vor Erreichen der theoretischen Wurfweite in einzelne Tropfen zersprüht (Th. Oehler: Der Wasserstrahl und seine Auflösung in Tropfen, Technische Mechanik und Thermodynamik, September 1930, Band 1, Heft 9, Seiten 329-338).

Der erfindungsgemäß genutzte Flüssigkeitsstrahl muss daher so beschaffen sein, dass er beim Austritt aus der mindestens einen Düse die Pflanze (bzw. den Boden) erreicht, bevor er in einzelne Tropfen zersprüht.

Dies kann insbesondere durch die Wahl der Fördermittel, die die elektrisch leitfähige Flüssigkeit aus dem Behälter befördern, und/oder die Wahl der mindestens einen Düse erreicht werden. Details zur Erzeugung ununterbrochener (zusammenhängender) Flüssigkeitsstrahlen sind im Stand der Technik ausgiebig beschrieben (siehe z.B. T. Gierra: Messung der Eigenschaften freier Wasserstrahlen in Luft, https://hdl.handle.net/20.500.11970/103369; DD205976; DE29517853U1; D. Aigner, D. Carstensen: Technische Hydromechanik 2 - Spezialfälle, 2. Aufl., Beuth-Verlag 2015, ISBN 978-3-410-22209-5; DE3316992A1; EP0141036A2; WO8903729A1).

Im Auslassbereich der mindestens einen Düse befindet sich eine Elektrode, die in dieser Beschreibung aufgrund ihrer räumlichen Nähe zur Düse als Düsenelektrode bezeichnet wird. Die Düsenelektrode ist so angeordnet, dass die Flüssigkeit, die durch die Düse in Richtung z.B. einer Pflanze gefördert wird, in Kontakt mit der Düsenelektrode gerät. Dies kann dadurch erreicht werden, dass ein Teil der Düse oder die gesamte Düse aus einem elektrisch leitfähigen Material (vorzugsweise einem Metall) gefertigt ist, das über ein Kabel oder eine andere elektrisch leitende Verbindung mit der Spannungsquelle verbunden ist. Es ist auch denkbar, dass vor der Düse ein Blech oder eine Blende angeordnet ist, das/die von der austretenden Flüssigkeit berührt wird. Durch den Kontakt der Düsenelektrode mit dem Flüssigkeitsstrahl wird das elektrische Potenzial des Flüssigkeitsstrahls auf das elektrische Potenzial der Elektrode gebracht.

Trifft der Flüssigkeitsstrahl, der düsenseitig in Kontakt mit der Düsenelektrode steht, auf einen Teil einer Pflanze wird aufgrund der freien Ladungsträger in dem Flüssigkeitsstrahl das Potenzial des Teils der Pflanze ebenfalls verändert: es nähert sich dem Potenzial der Düsenelektrode an (aufgrund der elektrischen Widerstände zwischen der Düsenelektrode und dem Teil der Pflanze herrscht zwischen der Düsenelektrode und dem Teil der Pflanze ein Potenzialgefälle).

Die Gegenelektrode kann nun ebenfalls direkt (unmittelbar) oder indirekt (mittelbar) in Kontakt mit einem anderen Teil der Pflanze gebracht werden. Zwischen der Gegenelektrode und der Düsenelektrode liegt eine Spannung an; infolge des direkten oder indirekten Inkontaktbringens der Pflanzenteile mit den jeweiligen Elektroden herrscht eine Spannung zwischen dem Teil der Pflanze, der in Kontakt mit der Düsenelektrode steht und dem Teil der Pflanze, der in Kontakt mit der Gegenelektrode steht. Es kommt zu einem Stromfluss zwischen den Pflanzenteilen, der die Pflanze schwächt oder zerstört.

Der Begriff "direkter (unmittelbarer) Kontakt einer Elektrode mit einem Objekt" bedeutet, dass die Elektrode das Objekt berührt. Der Begriff "indirekter (mittelbarer) Kontakt einer Elektrode mit einem Objekt" bedeutet, dass die Elektrode das Objekt nicht berührt, dass die Elektrode aber ein weiteres Objekt berührt, das wiederum das Objekt berührt.

Es kann eine einzelne Düsenelektrode eingesetzt werden; es können aber auch mehrere Düsenelektroden eingesetzt werden. Die Zahl der Düsenelektroden entspricht üblicherweise der Zahl der Düsen; es ist aber auch denkbar, dass eine Düsenelektrode so angebracht ist, dass sie in Kontakt mit den Flüssigkeitsstrahlen, die durch mehrere Düsen treten, kommt. In einem solchen Fall sind mehr Düsen als Düsenelektroden vorhanden.

Es kann eine einzelne Gegenelektrode eingesetzt werden; es können aber auch mehrere Gegenelektroden eingesetzt werden. Üblicherweise ist die Zahl der eingesetzten Gegenelektroden gleich der Zahl der eingesetzten Düsenelektroden; sie kann aber auch größer oder kleiner sein.

Wie bereits ausgeführt, kann der Kontakt der Pflanze mit der Düsenelektrode erfindungsgemäß über eine elektrisch leitfähige Flüssigkeit als elektrisch leitende Verbindung hergestellt werden. Der Kontakt der Pflanze mit der Gegenelektrode kann prinzipiell ebenfalls über die elektrisch leitfähige Flüssigkeit hergestellt werden. In einem solchen Fall werden mindestens zwei Flüssigkeitsstrahlen auf die Pflanze gerichtet; einer der Flüssigkeitsstrahlen steht in Kontakt mit der Düsenelektrode, der andere Flüssigkeitsstrahl steht in Kontakt mit der Gegenelektrode.

Denkbar ist auch, dass eine erste Pflanze in Kontakt mit einem ersten Flüssigkeitsstrahl gebracht wird, wobei der erste Flüssigkeitsstrahl in Kontakt mit der Düsenelektrode steht, eine zweite Pflanze in Kontakt mit einem zweiten Flüssigkeitsstrahl gebracht wird, wobei der zweite Flüssigkeitsstrahl in Kontakt mit der Gegenelektrode steht, und bei einer angelegten Spannung zwischen Düsenelektrode und Gegenelektrode ein Strom zwischen der Düsenelektrode und Gegenelektrode durch den ersten Flüssigkeitsstrahl, durch die erste Pflanze, durch den Boden zwischen der ersten Pflanze und der zweiten Pflanze, durch die zweite Pflanze und durch die zweite Flüssigkeit fließt. Die erste und die zweite Pflanze werden gleichzeitig bekämpft.

Denkbar ist auch, dass die Gegenelektrode in direktem Kontakt mit der Pflanze, die bekämpft werden soll, steht, während die Düsenelektrode über einen Flüssigkeitsstrahl (also indirekt) ebenfalls in Kontakt mit der Pflanze steht. Bei einer angelegten Spannung zwischen Düsenelektrode und Gegenelektrode fließt ein Strom zwischen der Düsenelektrode und Gegenelektrode durch den Flüssigkeitsstrahl und durch die Pflanze.

Denkbar ist auch, dass die Gegenelektrode in direktem Kontakt mit dem Boden steht, in dem die Pflanze wächst, die bekämpft werden soll. Die Pflanze wird über einen Flüssigkeitsstrahl in Kontakt mit der Düsenelektrode gebracht. Bei einer angelegten Spannung zwischen Düsenelektrode und Gegenelektrode fließt ein Strom zwischen der Düsenelektrode und Gegenelektrode durch den Flüssigkeitsstrahl, durch die Pflanze und durch den Boden.

Weitere Möglichkeiten sind denkbar.

Eine Gegenelektrode, die in direktem Kontakt mit einer Pflanze oder dem Boden, in dem die Pflanze wächst, steht, kann beispielsweise als Ausleger, Netz, Gitter, Band, Bürste oder dergleichen ausgeführt sein.

Die Spannung zwischen der mindestens einen Düsenelektrode und der mindestens einen Gegenelektrode wird über eine Spannungsquelle erzeugt, die üblicherweise ein Bestandteil der erfindungsgemäßen Vorrichtung ist. Es ist aber prinzipiell auch denkbar, dass die Spannungsquelle stationär aufgebaut ist und über eine Kabelverbindung mit der Düsenelektrode und der Gegenelektrode verbunden ist. Die Spannungsquelle kann ein Generator oder ein Akkumulator sein. Es ist auch denkbar, dass die erfindungsgemäße Vorrichtung über mehrere Spannungsquellen verfügt.

Die Spannung zwischen der Düsenelektrode und der Gegenelektrode kann eine Gleichspannung oder eine Wechselspannung sein. Vorzugsweise ist es eine Wechselspannung.

Bei der erfindungsgemäßen Verwendung eines Flüssigkeitsstrahls als flexibel einsetzbare "verlängerte Elektrode" sollte darauf geachtet werden, dass kein Kurzschluss entsteht. Ein Kurzschluss kann beispielsweise in folgendem Szenario entstehen: Die Gegenelektrode wird in dem Boden in der Nähe der Pflanze, die bekämpft werden soll, platziert. Ein Flüssigkeitsstrahl, der in Kontakt mit der Düsenelektrode steht, wird auf die Pflanze gerichtet. Die Flüssigkeit trifft auf die Pflanze, läuft an dieser herunter auf den Boden und gerät in Kontakt mit der Gegenelektrode.

Um einen Kurzschluss zu vermeiden, können verschiedene Maßnahmen (auch nebeneinander) ergriffen werden. Eine Maßnahme kann darin bestehen, dass der Flüssigkeitsstrahl stets von der Gegenelektrode weg gerichtet ist. Eine weitere Maßnahme kann darin bestehen, dass eine Spannung zwischen der Düsenelektrode und der Gegenelektrode nur für eine spezifische Zeitspanne angelegt wird, die so kurz ist, dass die Flüssigkeit in dieser Zeitspanne die Gegenelektrode nicht erreichen kann.

Es ist denkbar, dass dauerhaft eine Spannung zwischen Düsenelektrode und Gegenelektrode besteht. Es ist denkbar, dass eine elektrisch leitfähige Flüssigkeit in Form von Pulsen auf eine oder mehrere unerwünschte Pflanzen geleitet wird. Ein Puls muss dabei so lang sein, dass sich zwischen der Düsenelektrode und der Pflanze ein zusammenhängender Strahl ergibt, da anderenfalls kein Stromfluss möglich ist.

Denkbar ist aber auch, dass die Düsenelektrode und Gegenelektrode spannungslos gehalten werden und nur dann eine Spannung zwischen der Düsenelektrode und der Gegenelektrode angelegt wird, wenn ein Flüssigkeitsstrahl durch die Düse tritt. Denkbar ist auch, dass eine Spannung eine spezifische Zeitspanne nach dem Durchtritt des Flüssigkeitsstrahls durch die Düse angelegt wird. Die spezifische Zeitspanne kann zum Beispiel diejenige sein, die der Flüssigkeitsstrahl benötigt, um die Pflanze zu erreichen. Die Spannung und/oder der Flüssigkeitsstrahl kann dann solange aufrechterhalten werden, wie es erforderlich ist, um die Pflanze effektiv zu bekämpfen.

In einer bevorzugten Ausführungsform umfasst die erfindungsgemäße Vorrichtung einen oder mehrere Abstandssensoren. Ein solcher Abstandssensor misst den Abstand zwischen der Elektrode und der Pflanze, zwischen denen eine elektrisch leitende Verbindung aufgebaut werden soll. Nur dann, wenn der gemessene Abstand nicht größer als ein definierter Grenzwert ist, wird die elektrisch leitfähige Flüssigkeit in Richtung der Pflanze befördert. Ist der gemessene Abstand größer als der definierte Grenzwert, besteht die Gefahr, dass die Flüssigkeit in Tropfen zersprüht, bevor sie die Pflanze erreicht.

Der Grenzwert kann beispielsweise berechnet und/oder empirisch ermittelt werden.

Abstandssensoren sind in vielfältiger Form kommerziell verfügbar (siehe z.B. W. Paul, H. Speckmann: Radarsensoren - Neue Technologien zur präzisen Bestandsführung, Landtechnik 59, 2/2004, Seiten 92 bis 93; https://www.researchgate.net/publication/265943938; D. Nieberg et al.: Multireflex-Ultraschall-Sensorsystem zur Feld-Phänotypisierung von Getreide, https://www.hsosnabrueck.de/fileadmin/HSOS/Homepages/COALA/Veroeffentlichungen/ 2014-VDI-Tagung-Multireflex-Ultraschall-Sensorsystem_zur_Feld-Phaenotypisierung_von_ Getreide_.pdf).

In einer bevorzugten Ausführungsform ist die mindestens eine Düse, über die ein Flüssigkeitsstrahl erzeugt wird, beweglich ausgeführt. Sie kann beispielsweise horizontal und/oder vertikal schwenkbar ausgeführt sein. In einer bevorzugten Ausführungsform sind ein oder mehrere Sensoren vorhanden, die den Abstand einer unerwünschten Pflanze und/oder die Höhe einer unerwünschten Pflanze ermitteln und die bewegliche Düse so einstellen, dass ein Flüssigkeitsstrahl die Pflanze im oberen Bereich (z.B. im oberen Viertel, im oberen Drittel oder in der oberen Hälfte) trifft. In einer weiteren bevorzugten Ausführungsform sind ein oder mehrere Sensoren vorhanden, die die Position einer Pflanze in einem Boden ermitteln und die bewegliche Düse so einstellen, dass ein Flüssigkeitsstrahl den Boden in einem Abstand von 0 bis 50 cm, vorzugsweise von 10 bis 40 cm, noch mehr bevorzugt von 10 bis 30 cm von der Pflanze trifft.

In einer weiteren bevorzugten Ausführungsform ist mindestens eine Düse (z.B. eine Schlitzdüse) vorhanden, die einen Wasservorhang erzeugt, der vertikal (von oben) auf unerwünschte Pflanzen trifft. Vorzugsweise ist die mindestens eine Düse höhenbeweglich ausgeführt, so dass die Höhe der Düse an die Größe einer Pflanze angepasst werden kann. Ein Abstandssensor kann den Abstand der Düse zur Pflanze (aber auch zum Boden) messen.

Die erfindungsgemäße Vorrichtung kann als Rücksackgerät ausgeführt sein, das von einem Menschen getragen wird. Die erfindungsgemäße Vorrichtung kann ferner als ein Fahrzeug ausgeführt sein oder kann mit einem Fahrzeug verbindbar ausgeführt sein. Ein solches Fahrzeug kann eine Landmaschine (z.B. ein Traktor), ein Straßenfahrzeug, ein Schienenfahrzeug oder dergleichen sein. Die erfindungsgemäße Vorrichtung kann ferner als ein bemanntes oder unbemanntes Flugzeug (Drohne) ausgeführt sein.

Die erfindungsgemäße Vorrichtung kann so ausgeführt sein, dass sie sich autonom oder durch einen Menschen gesteuert über ein Feld, auf einem Weinberg, über einen Platz, entlang einer Straße, über Gleisanlage, entlang von Schienen oder dergleichen bewegt und unerwünschte Pflanzen bekämpft.

Die erfindungsgemäße Vorrichtung kann mit Mitteln zur Erkennung von unerwünschten Pflanzen ausgestattet sein.

Die erfindungsgemäße Vorrichtung kann mit weiteren Mitteln zu Bekämpfung von unerwünschten Pflanzen ausgestattet sein, wie beispielsweise Mitteln zum Vereisen, Verbrennen der Pflanzen oder Mitteln zur Bekämpfung von unerwünschten Pflanzen mit elektromagnetischer Strahlung (UV-Licht, Laserlicht) oder Mitteln zur chemischen oder biologischen Bekämpfung von Pflanzen.

Die Erfindung wird nachstehend anhand von Figuren näher erläutert, ohne die Erfindung auf die in den Figuren gezeigten Merkmale und Merkmalskombinationen beschränken zu wollen.

Es zeigen:

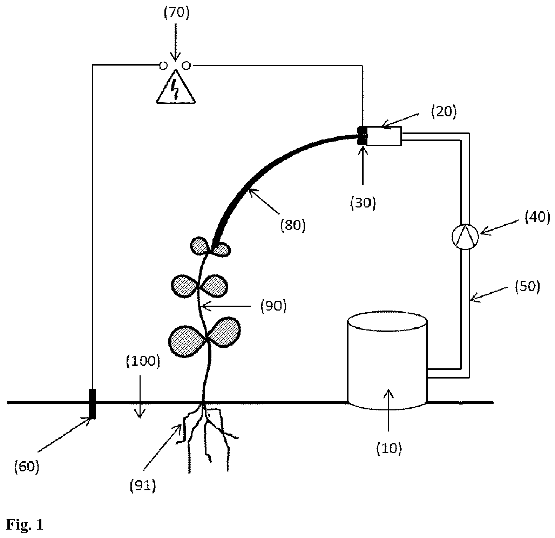

Fig. 1 zeigt schematisch eine Ausführungsform der erfindungsgemäßen Vorrichtung im Einsatz.
   Die erfindungsgemäße Vorrichtung umfasst einen Behälter (10), in dem eine elektrisch leitfähige Flüssigkeit enthalten ist. Die erfindungsgemäße Vorrichtung umfasst ferner eine Düse (20), die über eine Leitung (50) mit dem Behälter (10) verbunden ist. Die erfindungsgemäße Vorrichtung umfasst ferner Fördermittel (40) zur Förderung der elektrisch leitfähigen Flüssigkeit durch die Leitung (50) zur Düse (20). An der Düse (20) tritt die elektrisch leitfähige Flüssigkeit in Form eines Flüssigkeitsstrahls (80) in Richtung einer Pflanze (90) aus. Die erfindungsgemäße Vorrichtung umfasst ferner eine Düsenelektrode (30), die am Auslassbereich der Düse (20) angebracht ist. Die elektrisch leitfähige Flüssigkeit, die an der Düse (20) austritt, steht in Kontakt mit der Düsenelektrode (30). Die erfindungsgemäße Vorrichtung umfasst ferner eine Gegenelektrode (60), die in direktem Kontakt mit dem Boden (100) steht, in dem die Pflanze (90) wächst. Die erfindungsgemäße Vorrichtung umfasst ferner eine Spannungsquelle (70) zum Anlegen einer Spannung zwischen der Düsenelektrode (30) und der Gegenelektrode (60). Im vorliegenden Beispiel erzeugt die Düse (20) mit Hilfe der Fördermittel (40) einen zusammenhängenden Flüssigkeitstrahl (80) der auf die Pflanze (90) trifft. Bei einer angelegten Spannung zwischen der Düsenelektrode (30) und der Gegenelektrode (60) fließt ein Strom zwischen der Düsenelektrode (30) und der Gegenelektrode (60), der durch den Flüssigkeitstrahl (80), durch Teile der Pflanze (90) oberhalb des Bodens (100), durch Wurzeln (91) der Pflanze (90) im Boden (100) und durch den Boden (100) fließt.

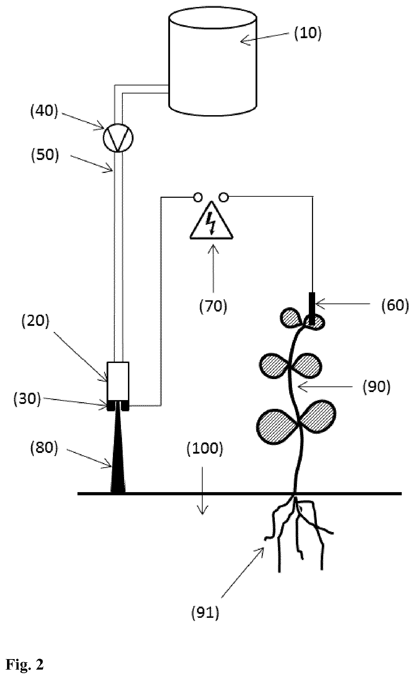

Fig. 2 zeigt schematisch eine weitere Ausführungsform der erfindungsgemäßen Vorrichtung im Einsatz.
   Die erfindungsgemäße Vorrichtung umfasst einen Behälter (10), eine Düse (20), Fördermittel (40), eine Leitung (50), ein eine Düsenelektrode (30), eine Gegenelektrode (60) und eine Spannungsquelle (70).
   In dem Behälter (10) ist eine elektrisch leitfähige Flüssigkeit enthalten ist. Die Düse (20) ist über die Leitung (50) mit dem Behälter (10) verbunden. Das Fördermittel (40) fördert die elektrisch leitfähige Flüssigkeit aus dem Behälter (10) in Richtung der Düse (20). Die elektrisch leitfähige Flüssigkeit tritt an der Düse (20) in Form eines Flüssigkeitsstrahls (80) aus. Der Flüssigkeitsstrahl (80) steht in Kontakt mit der Düsenelektrode (30). Der Flüssigkeitsstrahl (80) steht ferner in Kontakt mit dem Boden, in dem eine Pflanze (90) wächst. Die Gegenelektrode (60) steht in Kontakt mit der Pflanze (90). Zwischen der Düsenelektrode (30) und der Gegenelektrode (60) ist eine elektrische Spannung angelegt. Es fließt ein Strom zwischen der Düsenelektrode (30) und der Gegenelektrode (60). Der Strom fließt durch den Flüssigkeitsstrahl (80), durch den Boden (100), durch Wurzeln (91) der Pflanze (90) und durch Teile der Pflanze (90).

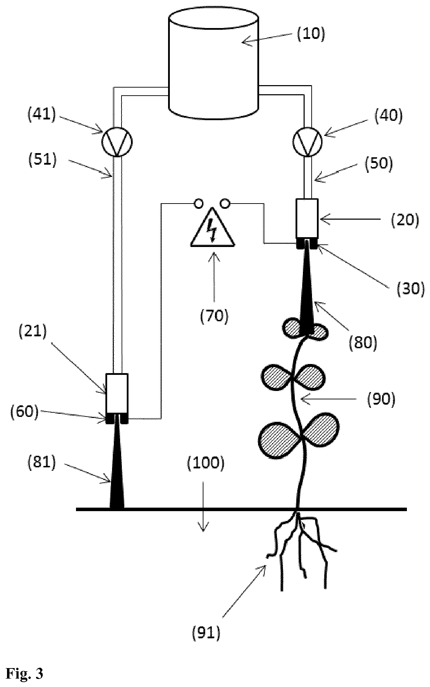

Fig. 3 zeigt schematisch eine weitere Ausführungsform der erfindungsgemäßen Vorrichtung im Einsatz.
   Die erfindungsgemäße Vorrichtung umfasst einen Behälter (10), eine erste Düse (20), eine zweite Düse (21), eine erste Leitung (50), eine zweite Leitung (51), ein erstes Fördermittel (40), ein zweites Fördermittel (41), eine Düsenelektrode (30), eine Gegenelektrode (60) und eine Spannungsquelle (70).
   In dem Behälter (10) ist eine elektrisch leitfähige Flüssigkeit enthalten ist. Die erste Düse (20) ist über die erste Leitung (50) mit dem Behälter (10) verbunden. Die zweite Düse (21) ist über die zweite Leitung (51) ebenfalls mit dem Behälter (10) verbunden. Das erste Fördermittel (40) fördert die elektrisch leitfähige Flüssigkeit aus dem Behälter (10) in Richtung der ersten Düse (20). Das zweite Fördermittel (41) fördert die elektrisch leitfähige Flüssigkeit aus dem Behälter (10) in Richtung der zweiten Düse (21). Die elektrisch leitfähige Flüssigkeit tritt an der ersten Düse (20) in Form eines ersten Flüssigkeitsstrahls (80) und an der zweiten Düse (21) in Form eines zweiten Flüssigkeitsstrahls (81) aus. Der erste Flüssigkeitsstrahl (80) steht in Kontakt mit der Düsenelektrode (30). Der zweite Flüssigkeitsstrahl (81) steht in Kontakt mit der Gegenelektrode (60). Der erste Flüssigkeitsstrahl (80) steht ferner in Kontakt mit einer Pflanze (90). Der zweite Flüssigkeitsstrahl (81) steht ferner in Kontakt mit dem Boden (100), in dem die Pflanze (90) wächst. Zwischen der Düsenelektrode (30) und der Gegenelektrode (60) ist eine elektrische Spannung angelegt. Es fließt ein Strom zwischen der Düsenelektrode (30) und der Gegenelektrode (60). Der Strom fließt durch den ersten Flüssigkeitsstrahl (80), durch Teile der ersten Pflanze (90) oberhalb des Bodens (100), in dem die erste Pflanze (90) wächst, durch Wurzeln (91) der ersten Pflanze (90) im Boden (100), durch den Boden (100) und durch den zweiten Flüssigkeitsstrahl (81).

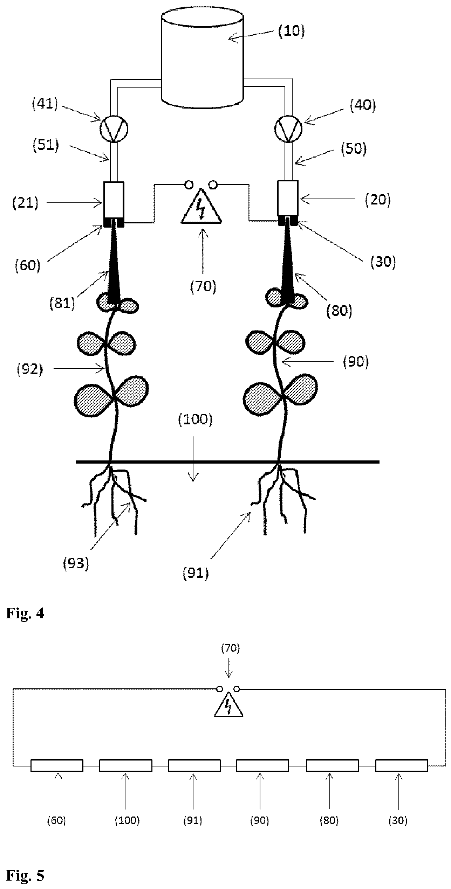

Fig. 4 zeigt schematisch eine weitere Ausführungsform der erfindungsgemäßen Vorrichtung im Einsatz.
   Die erfindungsgemäße Vorrichtung umfasst einen Behälter (10), eine erste Düse (20), eine zweite Düse (21), eine erste Leitung (50), eine zweite Leitung (51), ein erstes Fördermittel (40), ein zweites Fördermittel (41), eine Düsenelektrode (30), eine Gegenelektrode (60) und eine Spannungsquelle (70).
   In dem Behälter (10) ist eine elektrisch leitfähige Flüssigkeit enthalten ist. Die erste Düse (20) ist über die erste Leitung (50) mit dem Behälter (10) verbunden. Die zweite Düse (21) ist über die zweite Leitung (51) ebenfalls mit dem Behälter (10) verbunden. Das erste Fördermittel (40) fördert die elektrisch leitfähige Flüssigkeit aus dem Behälter (10) in Richtung der ersten Düse (20). Das zweite Fördermittel (41) fördert die elektrisch leitfähige Flüssigkeit aus dem Behälter (10) in Richtung der zweiten Düse (21). Die elektrisch leitfähige Flüssigkeit tritt an der ersten Düse (20) in Form eines ersten Flüssigkeitsstrahls (80) und an der zweiten Düse (21) in Form eines zweiten Flüssigkeitsstrahls (81) aus. Der erste Flüssigkeitsstrahl (80) steht in Kontakt mit der Düsenelektrode (30). Der zweite Flüssigkeitsstrahl (81) steht in Kontakt mit der Gegenelektrode (60). Der erste Flüssigkeitsstrahl (80) steht ferner in Kontakt mit einer ersten Pflanze (90). Der zweite Flüssigkeitsstrahl (81) steht ferner in Kontakt mit einer zweiten Pflanze (92). Zwischen der Düsenelektrode (30) und der Gegenelektrode (60) ist eine elektrische Spannung angelegt. Es fließt ein Strom zwischen der Düsenelektrode (30) und der Gegenelektrode (60). Der Strom fließt durch den ersten Flüssigkeitsstrahl (80), durch Teile der ersten Pflanze (90) oberhalb des Bodens (100), in dem die erste Pflanze (90) wächst, durch Wurzeln (91) der ersten Pflanze (90) im Boden (100), durch den Boden (100), durch Wurzeln (93) der zweiten Pflanze (92) im Boden (100), in dem die zweite Pflanze (92) wächst, durch Teile der zweiten Pflanze (92) oberhalb des Bodens (100) und durch den zweiten Flüssigkeitsstrahl (81).
Fig. 5 zeigt schematisch in vereinfachter Form ein Schaltbild für den in Fig. 1 gezeigten Stromkreis. Einzelne Elemente aus Fig. 1 sind in Fig. 5 in Form von Widerständen dargestellt. Die vereinfachte Darstellung soll nicht implizieren, dass die Erfindung nur für die Verwendung von Gleichspannung/Gleichstrom gedacht ist.
   Die Gegenelektrode (60) und die Düsenelektrode (30) sind über die folgenden Elemente elektrisch miteinander verbunden: Boden (100), Wurzeln (91), Pflanze (90) und Flüssigkeitsstrahl (80).

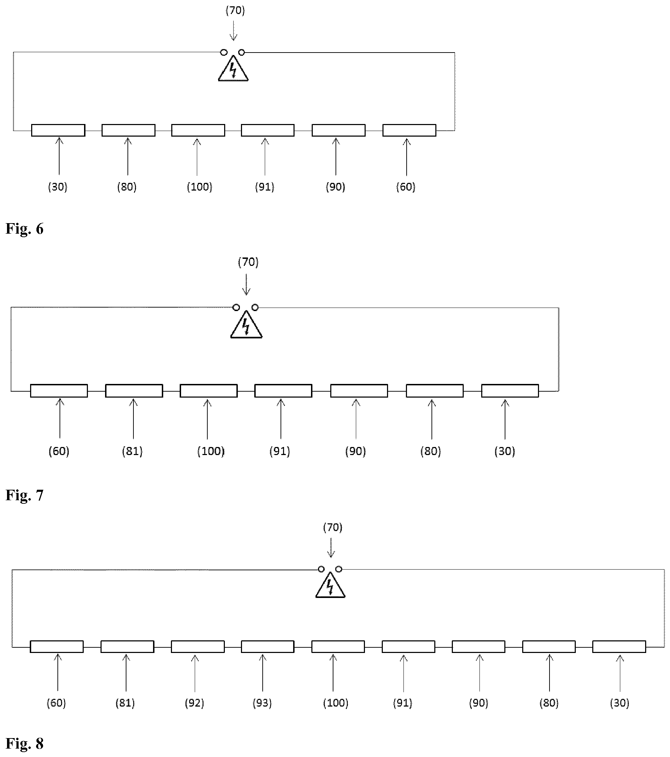

Fig. 6 zeigt schematisch in vereinfachter Form ein Schaltbild für den in Fig. 2 gezeigten Stromkreis.
   Die Düsenelektrode (30) und die Gegenelektrode (60) sind über die folgenden Elemente elektrisch miteinander verbunden: Flüssigkeitsstrahl (80), Boden (100), Wurzeln (91) der Pflanze (90), die in dem Boden (100) wächst, Pflanze (90) oberhalb des Bodens (100).
Fig. 7 zeigt schematisch in vereinfachter Form ein Schaltbild für den in Fig. 3 gezeigten Stromkreis.
   Die Gegenelektrode (60) und die Düsenelektrode (30) sind über die folgenden Elemente elektrisch miteinander verbunden: zweiter Flüssigkeitsstrahl (81), Boden (100), Wurzeln (91) der Pflanze (90), die in dem Boden (100) wächst, Pflanze (90) oberhalb des Bodens (100), erster Flüssigkeitsstrahl (80).
Fig. 8 zeigt schematisch in vereinfachter Form ein Schaltbild für den in Fig. 4 gezeigten Stromkreis.
   Die Gegenelektrode (60) und die Düsenelektrode (30) sind über die folgenden Elemente elektrisch miteinander verbunden: zweiter Flüssigkeitsstrahl (81), zweite Pflanze (92), Wurzeln (93) der zweiten Pflanze (92), Boden (100), Wurzeln (91) der ersten Pflanze (90), erste Pflanze (90), erster Flüssigkeitsstrahl (80).

## Patentansprüche

1. Vorrichtung umfassend
- einen Behälter zur Aufnahme einer elektrisch leitfähigen Flüssigkeit,
- mindestens eine Düse,
- Mittel zur Förderung der elektrisch leitfähigen Flüssigkeit aus dem Behälter durch die mindestens eine Düse,
- eine Düsenelektrode im Auslassbereich der mindestens einen Düse, wobei die Düsenelektrode so angeordnet ist, dass die elektrisch leitfähige Flüssigkeit bei der Förderung aus dem Behälter durch die mindestens eine Düse in Kontakt mit der Düsenelektrode kommt,
- eine Gegenelektrode und
- eine Spannungsquelle zum Anlegen einer Spannung zwischen der Düsenelektrode und der Gegenelektrode.

2. Vorrichtung gemäß Anspruch 1, die so ausgestaltet ist, dass bei der Förderung der elektrisch leitfähigen Flüssigkeit aus dem Behälter durch die mindestens eine Düse ein zusammenhängender Flüssigkeitsstrahl entsteht, der auf eine Pflanze oder einen Boden, in dem die Pflanze wächst, geleitet werden kann, wobei der Flüssigkeitsstrahl die Pflanze oder den Boden elektrisch miteinander verbindet.

3. Vorrichtung gemäß einem der Ansprüche 1 oder 2, umfassend eine Gegenelektrode in Form eines Metallkörpers, der in Kontakt mit dem Boden, in dem unerwünschte Pflanzen wachsen, gebracht werden kann.

4. Vorrichtung gemäß einem der Ansprüche 1 oder 2, umfassend
- eine erste Düse,
- eine zweite Düse,
- Fördermittel zur Förderung der elektrisch leitfähigen Flüssigkeit vom Behälter zur ersten Düse und zur zweiten Düse
- eine Düsenelektrode im Auslassbereich der ersten Düse, wobei die Düsenelektrode so angeordnet ist, dass die elektrisch leitfähige Flüssigkeit bei der Förderung aus dem Behälter durch die erste Düse in Kontakt mit der Düsenelektrode kommt,
- eine Gegenelektrode im Auslassbereich der zweiten Düse, wobei die Gegenelektrode so angeordnet ist, dass die elektrisch leitfähige Flüssigkeit bei der Förderung aus dem Behälter durch die zweite Düse in Kontakt mit der Düsenelektrode kommt.

5. Vorrichtung gemäß einem der Ansprüche 1 bis 4, umfassend
- mindestens einen Abstandssensor
- eine Steuereinheit
wobei der Abstandssensor konfiguriert ist, den Abstand von der mindestens einen Düse zur einer unerwünschten Pflanze oder zum Boden, in dem die unerwünschte Pflanze wächst, zu messen und an die Steuereinheit zu übermitteln,
wobei die Steuereinheit konfiguriert ist, den gemessenen Abstand mit einem Grenzwert zu vergleichen und für den Fall, dass der gemessene Abstand nicht größer als der Grenzwert ist, die Fördermittel zu veranlassen, die elektrisch leitfähige Flüssigkeit in Richtung der mindestens einen Düse zu fördern oder ein Ventil zu öffnen, damit elektrisch leitfähige Flüssigkeit in Richtung der mindestens einen Düse gefördert wird.

6. Vorrichtung gemäß einem der Ansprüche 1 bis 5, umfassend
- mindestens einen Sensor
- eine Steuereinheit
- mindestens eine bewegliche Düse zur Erzeugung eines Flüssigkeitsstrahls der elektrisch leitfähigen Flüssigkeit
wobei die mindestens eine Sensor konfiguriert ist, die Höhe einer unerwünschten Pflanze und/oder den Abstand einer unerwünschten Pflanze zur mindestens einen Düse zu messen und an die Steuereinheit zu übermitteln,
wobei die Steuereinheit konfiguriert ist, anhand der gemessenen Höhe und/oder des gemessenen Abstands die mindestens eine bewegliche Düse so auszurichten, dass der Flüssigkeitsstrahl auf einen spezifischen Bereich der Pflanze trifft.

7. Vorrichtung gemäß einem der Ansprüche 1 bis 6, umfassend
- mindestens einen Sensor
- eine Steuereinheit
- mindestens eine bewegliche Düse zur Erzeugung eines Flüssigkeitsstrahls der elektrisch leitfähigen Flüssigkeit
wobei die mindestens eine Sensor konfiguriert ist, die Position einer unerwünschten Pflanze in einem Boden zu ermitteln und an die Steuereinheit zu übermitteln,
wobei die Steuereinheit konfiguriert ist, anhand der ermittelten Position die mindestens eine bewegliche Düse so auszurichten, dass der Flüssigkeitsstrahl auf einen spezifischen Bereich des Bodens trifft.

8. Vorrichtung gemäß einem der Ansprüche 1 bis 7, umfassend
- eine Steuereinheit,
- ein Ventil,
wobei mit dem Ventil der Fluss der Flüssigkeit aus der mindestens einen Düse unterbrochen werden kann,
wobei die Steuereinheit konfiguriert ist, das Ventil für definierte Zeitspannen zu öffnen und zu schließen, wobei das Ventil für eine Zeitspanne geöffnet wird, die mindestens so lang ist, dass ein zusammenhängender Flüssigkeitsstrahl zwischen der mindestens einen Düse und einer unerwünschten Pflanze oder dem Boden, in dem die Pflanze wächst, erzeugt werden kann.

9. Vorrichtung gemäß einem der Ansprüche 1 bis 8, umfassend
- mindestens einen Sensor und
- eine Steuereinheit und
- ein Ventil mit dem der Fluss der Flüssigkeit aus der mindestens einen Düse unterbrochen werden kann, und/oder
- ein Schalter zum Unterbrechen der Verbindung der Düsenelektrode und/oder der Gegenelektrode mit der Spannungsquelle
wobei der mindestens eine Sensor konfiguriert ist, die Strommenge zu messen, die durch einen Teil der Pflanze fließt, und an die Steuereinheit zu übermitteln,
wobei die Steuereinheit konfiguriert ist,
- die gemessene Strommenge mit einem Grenzwert zu vergleichen und
- das Ventil zu schließen, wenn die Strommenge den Grenzwert erreicht hat, und/oder
- den Schalter zu öffnen, wenn die Strommenge den Grenzwert erreicht hat.

10. Verfahren umfassend die Schritte:
- Richten mindestens einer Düse auf ein erstes Objekt,
- Fördern einer elektrisch leifähigen Flüssigkeit aus einem Behälter durch die mindestens eine Düse in Richtung des ersten Objekts,
• wobei die aus der Düse austretende Flüssigkeit in Kontakt mit einer Düsenelektrode steht
• wobei durch die Flüssigkeit eine elektrisch leitende Verbindung zwischen der Düsenelektrode und dem ersten Objekt hergestellt wird,
- Anlegen einer Spannung zwischen der Düsenelektrode und einer Gegenelektrode,
• wobei die Gegenelektrode in einem direkten oder indirekten Kontakt mit einem zweiten Objekt steht,
• wobei ein elektrischer Strom zwischen der Düsenelektrode und der Gegenelektrode über die elektrisch leitende Verbindung zum ersten Objekt und durch Teile des ersten Objekts und durch Teile des zweiten Objekts fließt.

11. Verfahren gemäß Anspruch 10, **dadurch gekennzeichnet, dass**
- das erste Objekt eine unerwünschte Pflanze ist und das zweite Objekt ein Boden ist, in dem die Pflanze wächst, oder
- das erste Objekt ein Boden ist und das zweite Objekt eine unerwünschte Pflanze ist, die in dem Boden wächst, oder
- das erste Objekt ein oberer Teil einer unerwünschten Pflanze ist und das zweite Objekt ein unterer Teil der unerwünschten Pflanze ist, oder
- das erste Objekt ein unterer Teil einer unerwünschten Pflanze ist und das zweite Objekt ein oberer Teil der unerwünschten Pflanze ist, oder
- das erste Objekt eine erste unerwünschte Pflanze ist, die in einem Boden wächst, und das zweite Objekt eine zweite unerwünschte Pflanze ist, die ebenfalls in dem Boden wächst.

12. Verfahren gemäß einem der Ansprüche 10 oder 11, umfassend die Schritte:
- Richten mindestens einer Düse auf eine unerwünschte Pflanze,
- Inkontaktbringen einer Gegenelektrode mit dem Boden, in der die Pflanze wächst, vorzugsweise in einem Abstand von maximal 50 cm von der Pflanze
- Fördern einer elektrisch leifähigen Flüssigkeit aus einem Behälter durch die mindestens eine Düse in Richtung der Pflanze,
• wobei die aus der Düse austretende Flüssigkeit in Kontakt mit einer Düsenelektrode steht
• wobei durch die Flüssigkeit eine elektrisch leitende Verbindung zwischen der Düsenelektrode und der Pflanze hergestellt wird,
- Anlegen einer Spannung zwischen der Düsenelektrode und der Gegenelektrode,
• wobei ein elektrischer Strom zwischen der Düsenelektrode und der Gegenelektrode über die elektrisch leitende Verbindung zur Pflanze, durch Teile der Pflanze und durch Teile des Bodens fließt.

13. Verfahren gemäß einem der Ansprüche 10 oder 11, umfassend die Schritte:
- Inkontaktbringen einer Gegenelektrode mit einer Pflanze, die in einem Boden wächst,
- Richten mindestens einer Düse auf den Boden, in dem die Pflanze wächst, vorzugsweise in einem Abstand von maximal 50 cm von der Pflanze,
- Fördern einer elektrisch leifähigen Flüssigkeit aus einem Behälter durch die mindestens eine Düse in Richtung des Bodens,
• wobei die aus der Düse austretende Flüssigkeit in Kontakt mit einer Düsenelektrode steht
• wobei durch die Flüssigkeit eine elektrisch leitende Verbindung zwischen der Düsenelektrode und dem Boden hergestellt wird,
- Anlegen einer Spannung zwischen der Düsenelektrode und der Gegenelektrode,
• wobei ein elektrischer Strom zwischen der Düsenelektrode und der Gegenelektrode über die elektrisch leitende Verbindung zum Boden, durch den Boden und durch Teile der Pflanze fließt.

14. Verfahren gemäß einem der Ansprüche 10 oder 11, umfassend die Schritte:
- Richten mindestens einer ersten Düse auf eine erste Pflanze, die in einem Boden wächst,
- Richten mindestens einer zweiten Düse auf eine zweite Pflanze, die in demselben Boden wächst,
- Fördern einer elektrisch leifähigen Flüssigkeit aus einem Behälter durch die mindestens eine erste Düse in Richtung der ersten Pflanze, wobei die aus der Düse austretende Flüssigkeit in Kontakt mit einer Düsenelektrode steht, wobei durch die Flüssigkeit eine erste elektrisch leitende Verbindung zwischen der Düsenelektrode und der ersten Pflanze hergestellt wird,
- Fördern einer elektrisch leifähigen Flüssigkeit aus einem Behälter durch die mindestens eine zweite Düse in Richtung der zweiten Pflanze, wobei die aus der Düse austretende Flüssigkeit in Kontakt mit einer Gegenelektrode steht, wobei durch die Flüssigkeit eine zweite elektrisch leitende Verbindung zwischen der Gegenelektrode und der zweiten Pflanze hergestellt wird,
- Anlegen einer Spannung zwischen der Düsenelektrode und der Gegenelektrode, wobei ein elektrischer Strom zwischen der Düsenelektrode und der Gegenelektrode fließt, wobei der Strom durch die folgenden Objekte fließt: durch die erste elektrisch leitende Verbindung, durch die erste Pflanze, durch den Boden, durch die zweite Pflanze, durch die zweite elektrisch leitende Verbindung.

15. Verfahren gemäß einem der Ansprüche 10 oder 11, umfassend die Schritte:
- Richten mindestens einer ersten Düse auf eine Pflanze, die in einem Boden wächst,
- Richten mindestens einer zweiten Düse auf den Boden, in dem die Pflanze wächst,
- Fördern einer elektrisch leifähigen Flüssigkeit aus einem Behälter durch die mindestens eine erste Düse in Richtung der ersten Pflanze, wobei die aus der Düse austretende Flüssigkeit in Kontakt mit einer Düsenelektrode steht, wobei durch die Flüssigkeit eine erste elektrisch leitende Verbindung zwischen der Düsenelektrode und der Pflanze hergestellt wird,
- Fördern einer elektrisch leifähigen Flüssigkeit aus einem Behälter durch die mindestens eine zweite Düse in Richtung des Bodens, wobei die aus der Düse austretende Flüssigkeit in Kontakt mit einer Gegenelektrode steht, wobei durch die Flüssigkeit eine zweite elektrisch leitende Verbindung zwischen der Gegenelektrode und dem Boden hergestellt wird,
- Anlegen einer Spannung zwischen der Düsenelektrode und der Gegenelektrode, wobei ein elektrischer Strom zwischen der Düsenelektrode und der Gegenelektrode fließt, wobei der Strom durch die folgenden Objekte fließt: durch die erste elektrisch leitende Verbindung, durch die Pflanze, durch den Boden, durch die zweite elektrisch leitende Verbindung.
